# EUROPEAN PATENT APPLICATION

(11) **EP 4 282 275 A2**
(43) Date of publication of application: **29.11.2023**
(21) Application number: 23175095.1
(22) Date of filing: 24.05.2023
(51) Int. Cl.: A23K 10/10, A23J 1/00, A23J 1/12, A23J 1/14, A23J 3/34, A23K 10/30, A23K 30/10

(54) **PRESERVATION OF MASHED PLANT PROTEIN BIOMASS OR JUICE PREPARED THEREFROM BY PH-ADJUSTMENT AND ANAEROBIC STORAGE**

(30) Priority: 24.05.2022 DK PA202200490
(71) Applicant: Kleinhout, Arend, 4660 Store Heddinge (DK); Jensen, Niels Juul, 4652 Hårlev (DK); Madsen, Kurt Falkenløve, 4660 Store Heddinge (DK)
(72) Inventor: Kleinhout, Arend, 4660 Store Heddinge (DK); Jensen, Niels Juul, 4652 Hårlev (DK); Madsen, Kurt Falkenløve, 4660 Store Heddinge (DK)
(74) Representative: Holme Patent A/S

(57) **Abstract**

The present invention relates to a non-enzymatic method to preserve plant proteins under anaerobic storage of a plant juice at prevailing temperatures derived from a wet biomass respectively to the anaerobic storage of any protein juice. This storage can range from amounts of 10 liters to at least of 5,000 m³ and at a duration from a few minutes to a year at least.

## Description

### FIELD OF INVENTION

The present invention relates to a non-enzymatic method to preserve plant proteins under anaerobic storage of a plant juice at prevailing temperatures derived from a wet biomass respectively to the anaerobic storage of any protein juice. This storage can range from amounts of 10 liters to at least of 5,000 m³ and at a duration from a few minutes to a year at least.

### BACKGROUND OF THE INVENTION

### The prior art:

Recent interest in Europe in the use of plant proteins as an alternative to imported soya derived proteins in the feeding of livestock has already led to significant investments in the agricultural sector in Denmark and the Netherlands.

Further, research projects have been initiated to use plant proteins as, among others, an alternative to proteins from livestock in human nutrition.

Those plant proteins are derived from wet biomass. In the context of this application, wet biomass is defined at dry matter contents of 500 or less combined with a crude protein content of at least 10% - and a sugar content of at least 10% of the dry matter.

Plant proteins from wet biomass are currently produced upon a daily harvest and daily separation of this biomass into a fraction of Solids and one of Juice. The Solid fraction can be fed daily to livestock, ensiled daily for that same purpose, for the production of biogas, or used for other industrial purposes, such as the production of fiber, etc.

The Juice fraction comprises plant proteins, sugars and mineral salts which are in turn separated daily from one another through filtration, centrifugation and/or other technologies.

In the context of this description and claims, the wet biomass is the source of the plant juice with the proteins an integrated part hereof, both prior to - and after separation.

Whereas the plant proteins are compounded to pellets or stored otherwise, the remaining sugars if not processed as a thin - or thick sugar juice will comprise the residues of the process and serve as a feedstock for livestock, biogas or other industrial produce. The mineral salts will serve as fertilizer and will be returned to the fields.

The major problem in the above production of plant proteins in the prior art is the rapid deterioration hereof within the timespan between the harvest of the wet biomass and the separation hereof at the plant.

Delays in this timespan, in which minutes count, are frequently encountered during interrupting rainy periods or otherwise, progressively so at elevated temperatures. Further, a daily harvest combined with a production period limited to the growing season, are additional factors in the hike of the costs for such an operation.

Moreover, also major logistical problems can be encountered with the Solid fraction as well, such as the need to ensile on a continuous basis from day to day.

The historical solution to logistical problems in dealing with wet biomass in the prior art is a harvest of the fields in one hook/operation followed by hay making or an ensiling of the crop. Whereby ensiling in the prior art has taken over from hay making in large parts of Europe if not in most of the world.

### The problem and solution:

Ensiling or storage under anaerobic conditions in the prior art, however, currently leads to fermentation of both the plant protein complex, comprising the proteins, peptides and amino acids, and the sugars and is therefore not the solution to the problem.

Compared to the "State of the Art", the technology embedded in this patent preserves both the plant protein complex and the sugars under anaerobic storage of whatever quantity and duration.

Compared to US 10,214,616 B2, US 11,198,764 B2 and EP 3129427, all of them owned by the same three inventors as this invention, the focus of the present invention is on the protein complex and the functionality thereof in both the biomass and the plant juice derived thereof under anaerobic conditions during storage, leading to distinct differences to those granted patents.

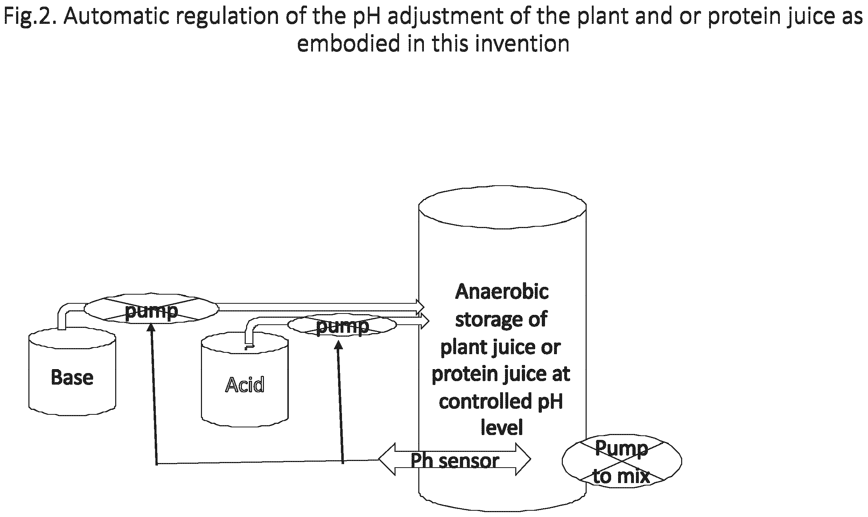

*NEW* and embodied in the invention is the functionality of the protein complex, comprising proteins, peptides and amino acids under such anaerobic storage of the biomass respectively the juice derived thereof, which can only be sustained at a narrow slot of the pH level combined with an automatic regulation hereof while mixing the biomass or juice at regular intervals (Fig. 2).

The present invention embodies a 1^{st} pH adjustment of the biomass respectively juice with a base to prevent fermentation and to sustain the functionality of the protein complex at a duration of at least 30 minutes through to at least a year, respectively at least 2 years.

The present invention also embodies the alternative of two successive pH adjustments to sustain the functionality of the protein complex at even lower pH values.

This in turn limits the duration of the 1^{st} pH adjustment ranging from 30 minutes to an hour, respectively less than two hours, respectively less than 4 hours, respectively less than a day, respectively less than 2 days, respectively less than a week, to be followed by a 2^{nd} pH adjustment with an acid or a base at a duration of at least 30 minutes through to at least a year, respectively at least two years.

This altogether in the understanding that the storage of wet biomass respectively the juice derived thereof, as of the whole or pockets herein, leads to anaerobic conditions whether isolated from air or not.

On account of this technology or methods to preserve the plant proteins in a stored biomass respectively juice derived hereof, on a scale ranging from at least 10 m³ through to at least 5,000 m³, a cost effective production of a plant juice comprising the protein complex in practice, is made possible compared to the prior art.

### Further implications of the technology of the present invention:

The implementation of the invention embodies the potential to store the total available biomass, rather than a costly daily operation of limited amounts in the prior art, in a onetime harvest followed by an anaerobic storage hereof with large equipment under good weather conditions while minimizing plant protein losses in the process.

In the prior art, such a plant protein juice production is based on a daily cut of crops, such as alfalfa, grasses, clovers, with that of beet leaves under trials at dry matter contents of 300 or less.

NEW in this context, compared to the prior art, is the embodiment of a wet biomass mash based on whole crops, at dry matter contents of 500 or less, such as, but not limited to, of cereals, of beet, of corn, of sorghum, of sun flower, respectively of mixtures thereof in the production of plant proteins, while making this endeavour far more efficient and cost effective than in the prior art.

Further to that, of particular interest in the economy and ultimate driver of the plant protein concept, is the embodiment of whole crop biomass of elevated protein content at dry matter contents of 600 or less, more preferably 350 or less, or e.g. between at least 30% and 50%, such as of whole crop peas, of beans, of oilseed rape, of lupins, of quinoa, respectively of mixtures hereof in the production of plant proteins.

Further to that, the embodiment of the present invention comprises crops high in protein and fiber, such as field beans (Vicia faba), for the combined production of proteins and industrial fiber.

Altogether, the present invention comprises an anaerobic storage, at varying scale and duration, of wet biomass at the perspective of a daily year-around separation hereof at a subsequent processing of the plant juice at limited amounts and investments.

While preserving the protein complex and the functionality thereof, the invention embodies a *product(s)* on account of a defined composition of the derived and stored plant juice. Further to that, the present invention embodies the perspective of a cumulative anaerobic storage of the plant juice in an airtight silo at a duration from a day to at least a year for delivery and *use* respectively processing at a later stage.

Summing it altogether up, the implementation of the technology of the present invention embodies a local, green, sustainable, bio-circular low-cost production of plant proteins, including side streams for milk, meat, biogas, fibers and sugars for a bio-based fermentation industry at the prevailing temperatures.

### THE SUMMARY OF THE INVENTION

An object of the present invention relates to a method of preparing a wet biomass and/or the juice derived thereof.

In particular, it may be seen as an object of the present invention to provide a method and therewith a product and use which solves the above-mentioned problems of the prior art.

### The methods the invention comprises:

The invention primarily deals with *methods* to preserve the plant protein complex comprising proteins, peptides and amino acid units under anaerobic conditions of wet biomass or the plant juice derived thereof in storage.

Preservation of the protein complex comprises both the physical presence and functionality of this protein complex.

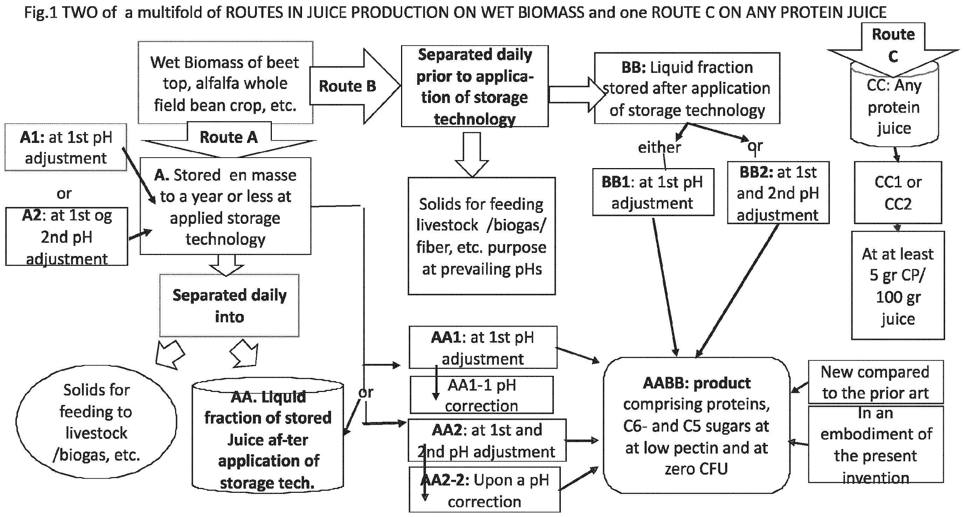

Through the application of the methods, the invention embodies unique compositions respectively *products,* depending on the parent source, of both the anaerobically stored biomass and the plant juice derived thereof (AABB in Fig.1).

In essence, the invention comprises a pH treatment to an alkaline state of the wet biomass or the juice derived thereof under anaerobic conditions. A pH state which kills respectively renders the microorganism useless in the fermentation of the plant protein complex and sugars.

Also, an alkaline state which leads to a sterilization or zero CFU of the wet biomass or the juice derived hereof. Added to that a simultaneous break-down of the pectin at an unlocking of/gaining access to the fiber, altogether leading to a unique composition of the juice, or *product* for that matter, compared to the prior art.

In an embodiment of the present invention, the method comprises a 1^{st} pH adjustment step of the biomass respectively of the plant juice with a base to a pH ranging from 8.5 to 10.5 at prevailing temperatures.

The present invention also comprises the option of a 2^{nd} pH adjustment step with a base or acid to the lowest possible pH level of the biomass respectively of the plant juice ranging from 1 to 10.5, respectively 7 - 10.5 at the prevailing temperatures.

In an embodiment of the present invention, the base applied in the 1^{st} - and 2^{nd} pH adjustment steps, incl. the corrective pH adjustment as referred to in this invention, is selected from the group consisting of sodium hydroxide (NaOH), potassium hydroxide (KOH), ammonium hydroxide (NH₄OH), calcium hydroxide (Ca(OH)₂), urea (CO(NH₂)₂), and mixtures thereof.

Correspondingly, embodied in both pH adjustment steps, incl. the corrective pH adjustment as referred to in this invention, the acid is selected from the group consisting of nitric acid (HNO₃), phosphoric acid (H₃PO₄), hydrochloric acid (HCl), and mixtures thereof.

Further to the methods, the present invention embodies storing the biomass respectively the liquid fraction under anaerobic conditions in combination with an automatic control of the pH level while being mixed at regular intervals (Fig.2).

To that effect, a pH sensor(s) is (are) mounted on the storage container combined with dosage equipment to supply the base and acid at automatic regulation to sustain a given pH (Fig.2).

### The products the invention embodies:

Compared to the prior art, the present invention embodies during anaerobic storage of the biomass mash respectively the plant juice derived thereof, a product, common to all parent sources of biomass, comprising a combination of a protein complex at sustained functionality of at least 10% of the dry matter content, at a zero pectin content, at zero CFU, while containing at least spores of sucrose at pHs higher than 7 at a given presence hereof in the parent biomass.

### The use the invention embodies:

Compared to the prior art which is characterized by an immediate use or processing of the plant juice within a few hours at the most, the present invention embodies an extended use hereof at a duration, ranging from an hour to at least one year, respectively at least two years in the production of protein pellets or protein meal for feeding livestock respectively in the production of food, respectively food products in human nutrition.

### BRIEF DESCRIPTION OF THE WET BIOMASS

In essence, economy will also be a driving force of the technology of the present invention. Hence, the wet biomass should yield a minimum of plant proteins to find its way in the market.

A plant protein operation includes the production of a Solid fraction/feedstock for the feeding of livestock, the production of biogas, respectively of fiber or other industrial use. Stemminess, lignin- and seed formation of such a feedstock are associated with reduced milk, meat and biogas production at improved fiber production.

To that effect, a balance has to be struck between yield of the biomass and the crude protein (CP) content thereof, whereby high yields are often associated with stemminess, lignin- and seed formation at reduced protein levels.

CP levels are an expression of total N in the dry matter, as measured by the Kjeldahl method and calculated as protein (N x 6.25), and a commonly used measure of quality of a feedstock. On average 80% hereof are proteins.

In the context of the present invention, wet biomass is a biomass defined at a dry matter content of less than 500, comprising the following features and crops:
- A Neutral Detergent Fiber (NDF) value of less than 750 of dry matter content,
   as measured according to the method of P.J.van Soest, 1963, in Use of detergents in the analysis of fibrous feeds, J. Assoc.Off.Anal. Chemistry 46: 825-829,
- crude fiber (CF) in an amount of less than 45% of the dry matter,
- lignin in an amount of less than 200 of the dry matter content,
- crude protein (CP) in an amount of at least 10% of the dry matter content,
- C6 sugars and C5 sugars collectively in an amount of at least 10% of the dry matter content.

The preferred crops for obtaining the wet biomass is selected from the group consisting of alfalfa, cool-season and tropical grasses, clover species, beet leaves, cereals, beet, corn, pea, bean, oilseed rape, sorghum, sun flower, lupins, rye, triticale, peanuts and mixtures thereof at dry matter contents of 300 or less. This list is however not exhaustive.

Compared to the prior art, the methods of the invention also comprise whole crop of cereals, whole crop beet, whole crop of corn, whole crop of pea, whole crop of bean, whole crop of oilseed rape, whole crop of sorghum, whole crop of sun flower, whole crop of lupins, whole crop of quinoa and mixtures thereof at dry matter contents of 600 or less, more preferably 350 or less, or e.g. between at least 30% and 500.

### BRIEF DESCRIPTION OF THE FIGURES

In the embodiment of the present invention three essential routes to the storage of a plant juice can be recognized, whereby a storage of a liquid exposed to air also resembles anaerobic conditions within a significant part of this liquid.

Fig 1. shows a flow chart of two of a multifold of scenarios in plant juice production on wet biomass whereas an integration of a protein juice derived under conditions other than those derived of wet biomass is presented as the third route C. Thus, the flow-diagram illustrates three basic scenarios out of many possibilities.

Plant juices derived from wet biomass have different amounts and compositions of the protein complex, respectively the peptides, respectively the amino acids, respectively the C6 sugar species, respectively the C5 sugar species as well as of the mineral salts (AABB in Fig. 1).

In an embodiment of the present invention, anaerobically wet biomass and the plant juices derived thereof, however, compared to the prior art have in common a zero CFU (no bacterial activity) at pectins ranging from zero to less than 5% of the dry matter content, at amounts of sucrose from next to zero through to 800 of the dry matter in the plant juice, provided the wet biomass parent of this plant juice contained this C6 sugar species to begin with (AABB in Fig.1).

In an embodiment of the present invention, protein juices from other sources contain at least 5% CP of total N (Fig. 1, Route C) are anaerobically stored under the similar options of choice of a 1^{st} - or a 1^{st} and 2^{nd} pH adjustment as described below under the plant derived juices (Fig.1, Routes A and B).

The anaerobically stored protein juice may have a crude protein content of at least 5 gram per 100 gram juice. Said protein juice may be used for any industrial purposes at said crude protein content.

To attain and to sustain any given pH adjustment, a further embodiment in the anaerobic storage of the present invention is the automated pH control and supply of base or acid at automated mixing at regular intervals, either by propellers, pump(s) or otherwise from once at least every 30 minutes through to at least once every 60 minutes, respectively at least every 90 minutes, through to at least once every 12 hours, respectively through to at least once every 24 hours, respectively through to at least once every 48 hours during this storage (Fig.2).

The invention comprises two routes in the production of plant juice on wet biomass.

One route being a separation of the wet biomass after the 1^{st} pH respectively the 2^{nd} pH adjustment (Fig. 1, route A) The other route being a separation of the fresh biomass prior to the 1^{st} pH adjustment (Fig.1, route B).

**Route A** in fig.1 represents a plant protein use derived from a pH adjusted stored wet biomass. To that effect, the wet biomass is mashed to a biomass mash by mechanical processes such as but not limited to grinding and crushing into particles as small as possible.

Thereupon, the mashed substrate will be deposited and stored into a cylindrical container, lagoon or silo while being mixed regularly from once every hour to at least once every second day at an automatic regulation of the pH and at prevailing temperatures (A in Fig. 1, Fig. 2).

Such a circular container respectively lagoon, but not limited hereto, might range in size from 10 m³, respectively 100 m³, respectively less than 1,000 m³, respectively less than 2,500 m³, respectively less than 4,000 m³, respectively in the range of 1,000 m³ to 10,000 m³ or more.

To secure thorough mixing, prior to or during the deposition of the biomass, water will be added in amounts ranging from 0 to less than 50% in weight of the fresh matter content of the (anticipated) biomass, while being subjected to the 1^{st} pH adjustment step (A1 in fig.1) in the meanwhile.

In the embodiment of the invention, this wet biomass mash adjusted with the 1^{st} pH adjustment is anaerobically stored in durations from less than 30 minutes through to a year or at least two years (A1, Fig. 1).

At regular intervals, ranging from once an hour, respectively to at least once a day, respectively to at least once a week, respectively to at least once a month, the biomass mash is separated into a solid and juice fraction.

### Plant juice at 1^{st} pH level (AA1 and AA1-1 in fig.1):

Upon separation, the solids, if not used directly as a feedstock for cattle, biogas or otherwise, will be stored anaerobically to prevent fermentation losses, disintegration or rot.

Similarly, the present invention embodies an anaerobic storage of the derived plant juice at the level of the 1^{st} pH adjustment in order to sustain the plant proteins and their functionality (AA1 in fig.1).

In a further embodiment of the present invention such a plant juice may be stored in an anaerobic environment ranging in size from a pallet tank of less than 50 liter, respectively less than 250 liter, respectively less than 500 liter, respectively less than 1,000 liter to a silo, but not limited hereto, of 10 m³, respectively 100 m³, respectively less than 1,000 m³, respectively less than 2,500 m³, respectively less than 4,000 m³, respectively in the range of 1,000 m³ to 10,000 m³ or more (AA1 and AA2 in Fig.1).

In the embodiment of the present invention, the anaerobic storage of the biomass mash adapted to a 1^{st} pH adjustment prior to separation (A1 in fig.1) as well as of the solids and juice derived thereof upon the separation can range from less than 30 minutes through to a year or two years (AA1 in fig. 1) .

In case the level of the 1^{st} pH adjustment (A1 in fig.1) of the biomass mash is not transferred to the juice fraction (AA1 in fig.1) but has changed upon such a separation, the invention embodies a restoration of this 1^{st} pH level of the juice to the level of the 1^{st} pH adjustment by an acid or base (AA1-1 in fig.1).

### Biomass mash and Plant juice after the 2^{nd} pH adjustment step of the biomass mash (Fig.1, AA2, AA2-2):

The present invention may comprise a 2^{nd} pH adjustment upon the 1^{st} pH adjustment of the biomass mash (Fig. 1, A2).

In an embodiment of the present invention, this 2^{nd} pH adjustment step with a base or an acid might be taken in the range of less than 30 minutes, respectively less than 24 hours, respectively less than 48 hours, respectively less than 72 hours, respectively less than 96 hours, respectively less than 120 hours, respectively less than a month, respectively less than a year upon the 1^{st} pH adjustment.

In a further embodiment of the present invention this biomass mash at the level of the 2^{nd} pH adjustment will be anaerobically stored in a period lasting from less than 30 minutes through to of a year, respectively or of two years at prevailing temperatures, automatic pH control and regular mixing (A2 in Fig.1).

At regular intervals, ranging from once an hour, respectively to at least once a day, respectively to at least once a week, respectively to at least once a month, the biomass mash adjusted with a 2^{nd} pH adjustment step is separated into a solid and juice fraction.

Subsequently, the solids, if not used directly as a feedstock for cattle, biogas or otherwise, will be stored anaerobically to prevent fermentation losses, disintegration or rot.

Similarly, the present invention embodies an anaerobic storage of the derived juice at the level of the 2^{nd} pH adjustment in order to sustain the plant proteins and their functionality in a period lasting from less than 30 minutes through to a year, respectively of two years (AA2 in Fig.1).

In case the level of the 2^{nd} pH adjustment (A2 in fig.1) of the biomass mash is not transferred to the juice fraction (AA2 in fig.1) but has changed upon such a separation, the invention embodies a restoration of this 2^{nd} pH level of the juice by an acid or base (AA2-2 in fig. 1) .

**Route B** represents a plant protein juice derived from a *fresh* wet biomass. To that effect, the fresh wet biomass is mashed by mechanical processes such as but not limited to grinding and crushing into particles as small as possible.

Upon the separation of this fresh biomass into a solid and juice fraction, the solid fraction is fed to livestock or ensiled to that effect, respectively used as a substrate for biogas production or ensiled to that effect, or used as a substrate for industrial production purposes, such as the production of hardboard, but not limited hereto.

In an embodiment of the present invention, the plant juice fraction derived from such a separation of a fresh biomass is pumped, but not limited hereto, to a pallet tank, respectively silo while simultaneously being adjusted with a base in a 1^{st} pH adjustment step (BB1in fig. 1).

In a further embodiment of the present invention, this storage might range in size from a pallet tank of 50 liter, respectively less than 250 liter, respectively less than 500 liter, respectively less than 1,000 liter to a tank, respectively circular container, respectively silo of 10 m³, respectively 100 m³, respectively less than 1,000 m³, respectively less than 2,500 m³, respectively less than 4,000 m³, respectively in the range of 1,000 m³ to 10,000 m³ or more (BB1 and BB2 in Fig.1).

Further to that, in an embodiment of the present invention, the storage of a liquid under above conditions is exposed to anaerobic conditions whether covered to exclude exposure to air or not.

In a further embodiment of the present invention, the derived juice at a pH level of a 1^{st} pH adjustment by a base can be stored for at least 30 minutes through to respectively one year, respectively through to two years at automatic pH control and mixing, at prevailing temperatures (BB1 in Fig. 1).

### The present invention may comprise a 2^{nd} pH adjustment upon the 1^{st} pH adjustment of the plant liquid (BB2 in Fig. 1).

In an embodiment of the present invention, this 2^{nd} pH adjustment step with a base or an acid of the juice might be taken in the range of less than 30 minutes, respectively less than 24 hours, respectively less than 48 hours, respectively less than 72 hours, respectively less than 96 hours, respectively less than 120 hours, respectively less than a month upon the 1^{st} pH adjustment (BB2 in fig.1).

In a further embodiment of the present invention, this protein juice at the level of the 2^{nd} pH adjustment will be anaerobically stored in a period lasting from less than 30 minutes through to of a year, respectively or of two years at automatic pH control and mixing, at prevailing temperatures (BB2 in Fig.1).

**Route C** in Fig. 1 comprises an anaerobic storage of any protein juice at a CP of at least 5 % of the dry matter content.

In an embodiment of the present invention, this protein juice will be either stored at a 1^{st} pH adjustment step or 2^{nd} pH adjustment step, conform to the procedures and anaerobic storage of the plant juice, described under BB1 and BB2 in Fig1 above.

### DETAILED DESCRIPTION OF THE INVENTION

The invention deals with the anaerobic storage of a protein-sugar-mineral based biomass mash and the plant juice derived thereof. There are two distinctly different options in this context.

Further, in either case the fresh wet biomass will be mashed into a biomass mash to the smallest particle sizes obtainable by practical equipment available hereto.

Firstly, a plant juice derived from a freshly harvested crop, subsequently stored anaerobically while subjected to the patented technology. Stored beets exposed to air respectively aeration are considered as fresh crops in this context. Also, a separation of the wet biomass mash into a solid and juice fraction *prior to the 1^{st} alkaline adjustment* (Fig.1, Route B).

Secondly, a plant juice derived from an anaerobically stored wet biomass mash while subjected to the alkaline technology. Also, *a separation* of a pH prepared wet biomass into a solid and juice fraction *after the 1^{st}* or alternatively after the 2^{nd} pH adjustment(s) (Fig.1, Route A).

In both cases, the derived plant juice is or will be subjected to a pH level which sustains a preservation of the protein complex and sugars.

In both Route A and Route B the juice will be stored in an airtight drum, pallet tank, container or silo, but not limited hereto, subjected to mixing at regular intervals of a duration of at least once every hour, respectively at least every 2 hours, respectively at least every 5 hours, respectively at least every 12 hours, respectively at least every 24 hours, respectively at least every 48 hours, at the required pH level and at prevailing temperatures ranging from 0 to 50 °C (Fig.2).

### Route A:

In Route A the mashed substrate A (A in Fig.1) will be deposited and stored into a cylindrical container while being mixed at regular intervals of a duration of at least once every hour, respectively at least every 2 hours, respectively at least every 5 hours, respectively at least every 12 hours, respectively at least every 24 hours, respectively at least every 48 hours, at the required pH level and at prevailing temperatures ranging from 0 to 50 °C (Fig.2).

To secure thorough mixing, prior to or during the deposition of the biomass, water will be added in amounts ranging from 0 to less than 50% in weight of the dry matter content of the (anticipated) biomass (A, in Fig. 1).

As to plant proteins, the pH regime to be applied to safeguard preservation and functionality thereof during anaerobic storage is confined to a minimum pH and narrow pH slot when limited to a 1^{st} pH adjustment (A1 respectively AA1 in Fig.1).

Embodied in the present invention is the option of an additional 2^{nd} pH adjustment, compared to the option limited to the 1^{st} pH adjustment, to attain an even lower pH level at a wider range in sustaining the physical presence of the protein complex and the functionality thereof (A2 respectively AA2 in Fig.1).

### The scenario limited to a 1^{st} pH adjustment of the biomass mash in Route A (Fig.1, A1).

In the event of limiting the anaerobic storage of the wet biomass to the 1^{st} pH adjusting step, the embodiment of the present invention comprises a pH adjustment with a base in the 1^{st} pH adjusting step in a period of at least 30 minutes to at least a year, respectively at least two years at automatic control of the pH level respectively regular mixing at the prevailing temperatures (Fig. 1, A1).

In an embodiment of the present invention the pH in the 1^{st} pH adjustment step may be adjusted with a base to 8 of the biomass mash, respectively to 8.5, to 9, to 9.5, to 10 or respectively to 10.5 hereof or such in the range of 8 to 9 of the biomass mash, respectively of 8.5 to 10, 9.5 to 10.5, 8.5 to 9.5, 8.5 to 10, 9 to 10, 9 to 10.5 hereof, or such as 8.5 or more, such as 9 or more, such as 10 or more of the biomass mash.

In an embodiment of the present invention, and for that matter in all possible scenarios, the temperature during the entire process may range from 1-50 °C, e.g. from 5-40 °C, such as in the range from 10-40 °C, e.g. from 15-30 °C, such as in the range from 10-20 °C, such as in the range of 1-15 °C, e.g. from 5-10 °C, such as below 20 °C, e.g. below 15 °C, e.g. below 10 °C.

### The scenario incl. a 2^{nd} pH adjustment of the biomass mash in Route A (Fig.1, A2).

In this scenario, the embodiment of the present invention comprises a 2^{nd} pH adjustment with a base or acid of the biomass mash.

In such an event of a 2^{nd} pH adjustment, the duration of the 1^{st} pH adjustment (A1 in Fig.1) of the biomass mash is limited to a period of at least 5 minutes, such as of at least 15 minutes, such as of at least 30 minutes, such as at of least 45 minutes, such as at of least 2 hours, such as at least of 3 hours, such as at least of 4 hours, such as at least of 5 hours, such as at least of 6 hours, such as at least of 8 hours, such as at least of10 hours, such as at least of 12 hours, such as at least of 15 hours, such as at least of 18 hours, such as at least of 24 hours, such as at least of 30 hours, such as at least of 36 hours, such as at least of 42 hours, such as at least of 48 hours, such as at least of 60 hours, such as at least of 72 hours, such as at least of 84 hours, such as at least of 96 hours, e.g. at least of 120 hours, such as at least of a week, respectively such as at least of a month, respectively such as at least of a year, respectively such as at least of two years.

In an embodiment of the present invention, the pH in the 2^{nd} pH adjustment step may be adjusted with an acid or base to a range of respectively 1-2, respectively 1-3, respectively 7 to 8, respectively 7.5 to 8.5, respectively 8.5 to 9, respectively 8.5 to 9.5, respectively 8.5 to 10, respectively 8.5 to 11 of the biomass mash, respectively to a range of 7 to 9, respectively 8 to 9.5, respectively 9 to 10, respectively 9 to 10.5, respectively 9.5 to 11 of the biomass mash, respectively such to a range of at least 7, respectively at least 9, respectively at least 9.5, respectively at least 10, respectively at least 10.5 of the biomass mash.

Further to above, the embodiment of the present invention comprises a pH adjustment in the 2^{nd} pH adjusting step in a period of at least 15 minutes to at least a year, respectively to at least 2 years, at an automated control of the pH level and regular mixing of the biomass mash.

In an embodiment of the present invention above and for that matter in all possible scenarios, the temperature during the entire process may range from 1-50 °C, e.g. from 5-40 °C, such as in the range from 10-40 °C, e.g. from 15-30 °C, such as in the range from 10-20 °C, such as in the range of 1-15 °C, e.g. from 5-10 °C, such as below 20 °C, e.g. below 15 °C, e.g. below 10 °C.

### A plant juice derived on Route A upon 1 pH adjustment (AA1 in Fig. 1).

Such a scenario embodies a *separation* of the pH adjusted and stored biomass mash (Fig.1. A1). Such a separation can be done daily or at any other time interval or duration.

The juice derived therewith is stored in a drum, respectively pallet tank, respectively container, respectively silo, but not limited hereto, prior to local use or delivery. Whether temporarily or otherwise, under airtight conditions or not, the juice as a whole or in part will be exposed to anaerobic conditions (AA1 in Fig.1).

The present invention embodies the scenarios whereby the pH of the biomass mash (A1 in Fig.1) is sustained in the juice upon the separation of this biomass (AA1 in Fig. 1).

However, this might not be given at all times. Therefore, as portrayed in Fig. 1, the invention embodies a pH adjustment of the derived juice to the level pursued in the 1^{st} adjustment step with an acid or base to a pH of 8 , respectively to 8.5, to 9, to 9.5, to 10 or respectively to 10.5 hereof or such in the range of 8 to 9, respectively of 8.5 to 10, 9.5 to 10.5, 8.5 to 9.5, 8.5 to 10, 9 to 10, 9 to 10.5, or such as 8.5 or more, such as 9 or more, such as 10 or more (AA1-1 in Fig.1).

To stabilize the pH in the juice, the present invention embodies a regular mixing of the juice ranging from 3 times to at least once a day at an automated pH controlled supply of the base or acid (Fig.2).

In an embodiment of the present invention, those derived pH levels in the juice are sustained at prevailing temperatures in a period of at least 15 minutes to a year or several years.

*A plant juice derived in Route A upon two pH adjustments* (AA2 in Fig.1).

This scenario comprises a separation of the anaerobically stored acidic or alkaline biomass mash at the level of the 2^{nd} pH adjustment (A2 in Fig.1). Such a separation can be done daily or at any other time interval or duration.

As to plant proteins the pH regime to be applied to safeguard preservation and functionality thereof during anaerobic storage of the juice is confined to a small pH slot when limited to a 1^{st} pH adjustment while less so and at even lower pH values after the 2^{nd} pH adjustment.

In the event of an anaerobic storage of the biomass mash upon the 2^{nd} pH adjustment step, the present invention embodies the scenarios whereby the pH of the biomass mash (A2 in Fig.1) is sustained in the juice (AA2 in Fig.1) upon the separation of this biomass.

However, given the narrowness of the pH range in preserving the plant proteins and the functionality thereof a pH correction of the juice upon separation of the biomass mash (A2 in Fig.1) may be required to stabilize the pH level (Fig. 1, AA2-2).

In so doing, in an embodiment of the present invention the pH of the stored juice may be adjusted in a corrective adjustment step to 2^{nd} pH levels with a base or an acid to a range of 1-2, 1-3, respectively 7-8, 8-8.5, 8.5-9, 8.5 to 9.5, 8.5 to 10, 8.5 to 11, respectively to a range of 8 to 9, 9 to 9.5, respectively 9 to 10, 9 to 10.5 9.5 to 10, 9.5 to 10.5, of 10 to 10.5, respectively such to a range of at least 8.5, respectively 9, 9.5, 10, or 10.5 of the stored juice (AA2-2 in Fig.1).

In an embodiment of the present invention, the pH in this corrective pH adjustment is adjusted with a base or acid in a period of at least 15 minutes to at least a year, respectively at least two years.

Further, to stabilize the pH in the juice, the present invention embodies a regular mixing of the juice ranging from at least once to three times a day at an automated pH controlled supply of the base or acid.

In an embodiment of the present invention, those derived pH levels in the juice are sustained at prevailing temperatures in a period of at least 15 minutes to a year or several years.

### Route B:

This scenario comprises a *separation of the fresh biomass* followed by subjecting of the juice to the preserving pH regime.

The period in-between both the harvest and separation of the fresh biomass as well as in-between the separation and use respectively storage of the plant juice thereof must be as short as possible; in fact minutes rather than 1, respectively 2, respectively 3 or more hours.

As to beets (Beta vulgaris), which can be stored fresh for periods of months duration, above is limited to the period between the separation and use respectively the storage of the plant juice.

Compared to the prior art, the present invention embodies an anaerobic storage of the plant juice from at least 30 minutes through to at least a year, respectively at least two years, at automated pH control, mixing and the prevailing temperatures (BB in Fig.1).

### A juice derived upon a 1^{st} pH adjustment (BB1 in Fig. 1).

The embodiment of the present invention comprises a (1^{st} ) pH adjustment with a base to 8, respectively to 8.5, to 9, to 9.5, to 10 or respectively to 10.5 hereof or such in the range of 8 to 9, respectively of 8.5 to 10, 9.5 to 10.5, 8.5 to 9.5, 8.5 to 10, 9 to 10, 9 to 10.5, or such as 8.5 or more, such as 9 or more, such as 10 or more.

In an embodiment of the present invention, those derived pH levels are sustained in the stored juice through regular mixing of once a day to at least once an hour, at the prevailing temperatures and automatic pH control and supply of the base in a period of at least 15 minutes to a year or several years.

### A plant juice derived upon a 2^{nd} pH adjustment (BB2 in Fig. 1)

In the event an embodiment of the present invention is based on a 2^{nd} pH adjustment, the duration of the 1^{st} pH adjustment of the plant juice (BB1 in Fig.1) is preferably limited, comprising a period of at least 5 minutes, such as of at least 15 minutes, such as of at least 30 minutes, such as of at least 45 minutes, such as of at least 2 hours, such as of at least of 3 hours, such as of at least of 4 hours, such as of at least of 5 hours, such as of at least of 6 hours, such as of at least of 8 hours, such as of at least 10 hours, such as of at least 12 hours, such as of at least 15 hours, such as of at least 18 hours, such as of at least 24 hours, such as of at least 30 hours, such as of at least 36 hours, such as of at least 42 hours, such as of at least 48 hours, such as of at least 60 hours, such as of at least 72 hours, such as of at least 84 hours, such as of at least 96 hours, e.g. of at least 120 hours, such as of at least a week, respectively such as of at least a month, respectively such as of at least a year, respectively such as of at least two years.

In the embodiment of the present invention, the plant juice may be adjusted in the 2^{nd} pH adjustment step with a base or an acid to a range of 1-2, 1-3, respectively 7 to 8, respectively 7.5 to 8.5, respectively 8.5 - 9, respectively 8.5 to 9.5, respectively 8.5 to 10, respectively 8.5 to 11 of the biomass mash, respectively to a range of 7 to 9, respectively 8 to 9.5, respectively 9 to 10, respectively 9 to 10.5, respectively 9.5 to 11 of the biomass mash, respectively such to a range of at least 7, respectively at least 9, respectively at least 9.5, respectively at least 10, respectively at least 10.5 (BB2 in Fig.1).

In an embodiment of the present invention, those derived pH levels are sustained in the stored juice at prevailing temperatures, automatic pH control, mixing and supply of the acid or base in a period of at least 15 minutes to a year or several years.

### The products the invention embodies:

In an embodiment of the present invention, the source of the wet biomass leaves a foot print (AABB in Fig. 1) on the composition of the biomass mash (A1, A2 in Fig.1) respectively on the derived plant juice thereof (BB1, BB2 in Fig.1).

The above comprising a difference in composition of both the biomass mash and of the plant juice in terms of protein content respectively the protein species herein and the amounts thereof, in terms of sugar content respectively the sugar species herein and the amounts thereof, respectively in terms of the mineral salts and respectively the species herein and the amounts thereof (AABB in Fig.1).

Therefore, in an embodiment of the invention, *products* of biomass mash (A1, A2 in Fig.1) and of plant juices (AA1, AA2, BB1, BB2 in Fig. 1) are produced which differ in their composition on the basis of the above variables or parameters (AABB in fig.1).

However, in an embodiment of the present invention, this array of products have one distinctive composition in common in the combination of zero pectin content at zero CFU levels, while containing at least spores of the sugar species sucrose at pH's higher than 7 provided a given presence hereof in the parent biomass.

In the context of such a common denominator in above product(s), in the embodiment of the present invention, the content of the protein complex is at least 50, a sucrose content of less than 800, a pectin content of less than 3% of the dry matter at zero CFU (AABB, A1,A2, AA1, AA2, BB1, BB2 in Fig.1).

### The use the invention embodies:

The prior art is characterized by an immediate use of the plant juice of a duration of a few hours at the most.

In contrast to that, the present invention embodies an anaerobic storage of the plant juice which sustains the protein complex and therewith an extended use hereof at a duration ranging from an hour to at least one year, respectively at least two years, at highly improved logistics, respectively a year around operation, respectively at far lower costs than in the prior art.

### EXAMPLES:

A green crop or wet biomass of alfalfa, beet leaves, whole crop field beans, whole crop field peas, etc., etc. are harvested, chopped into small particles crushed and mashed to a biomass mash.

### The prior art with the focus on plant juice (protein juice) in Route B:

In the prior art in Denmark and the Netherlands anno 2022, this is done by co-operating farmers delivering their biomass mash, grasses, respectively grass-clover mixtures, respectively luzerne on a daily basis to a central plant. To reduce protein losses to the minimum, the central plant will separate this mashed biomass within hours of arrival into solids and a protein juice (Fig. 1, Route B).

Whereas in the prior art the solids are returned to the co-operating farmers for feeding their livestock, the protein juice is processed immediately into protein pellets or protein meal.

In this scenario, in the prior art, the processing plant can only operate during days of good weather in the growing period making this an expensive operation on all accounts.

### The potential the invention embodies compared to the prior art in Route B:

New compared to the prior art and embodied in the present invention is the opportunity to store this daily produced plant juice anaerobically in a silo under regular mixing at automatically controlled and regulated pH conditions (Fig.1, BB1 and BB2).

Embodied in this present invention is a 1^{st} pH adjustment step with a base in the preservation of the protein complex during the duration of the storage which can range from 30 minutes through to 1 year, respectively through to 2 years (BB1 in Fig.1).

To have more flexibility and to come to an even lower pH level in which the protein complex is sustained, such an example reduces the duration of the 1^{st} pH level to a few hours, respectively less than a day, respectively less than a week, followed by a 2^{nd} pH adjustment with a base or an acid, at a duration which can range from 30 minutes through to 1 year, respectively through to 2 years at prevailing temperatures (BB2 in Fig.1).

This potential to store the plant juice for later use provides significant improvements in the logistics and flexibility of an operating plant from one which is limited to the growing period, such as in the prior art, to one with a year-around operation.

The plant juice can be stored in airtight pallet tanks ranging from 50 liter through to 1,000 liter, respectively in air tight silos or containers ranging from at least 10 m³ through to at least 5,000 m³ at prevailing temperatures.

Embodied in this present invention is that those pallet tanks, respectively containers, respectively silos are armed with a pH sensor(s) in combination with a drum or pallet tank containing a base.

Further to that, through automation of this entire process of a sensor driven pH dosage combined with a regulated mixing at programmed intervals, ranging from once every 30 minutes through to at least once every three days, isolated pockets at unwanted pH levels during storage can be avoided (Fig.2).

One of the implementation models in practice could be both an *on-farm separation and storage* of the plant juice combined with an off-farm processing plant of the plant use co-owned by the participating farmers.

Analogue to the procedures above, embodied in the present invention is a cumulative anaerobic storage of a protein juice other than the plant juices derived on wet biomass (Fig. 1, Route C, CC1 and CC2).

### Example involving the anaerobic storage of biomass mash (Route A) :

In Fig. 1, option A, the production of a plant protein juice is portrayed which is based on a separation of an anaerobically stored biomass mash subjected to the pH concept of the invention.

### The prior art in plant juice operations deals solely with a day-to-day harvest of the wet biomass.

The present invention, however, embodies a harvest and storage of the entire crop/wet biomass in one hook at immense logistical and costs-to-benefit advantages for both the farmer and producer of the plant protein pellets or plant protein meal.

In this option, the mashed substrate will be deposited and stored into a cylindrical container, lagoon or otherwise while being mixed regularly from once every 15 minutes to once every second day at an automatic regulation of the pH level and mixing at prevailing temperatures (Fig.1, A in Route A).

Further, the biomass mash can be stored in airtight silos or containers ranging from at least 10 m³ through to at least 5,000 m³ at prevailing temperatures (A1, A2 in Fig.1).

To secure thorough mixing, prior to or during the deposition of the biomass, water will be added in amounts ranging from 0 to less than 50% in weight of the fresh matter weight of the (anticipated) biomass, while being subjected to the 1^{st} pH adjustment step with a base in the meantime (A1 in Fig. 1).

In the embodiment of the present invention, the 1^{st} pH adjustment of this biomass mash can last from 30 minutes through to at least once a year, respectively through to at least 2 years at prevailing temperatures.

To have more flexibility and to come to an even lower pH level in which the protein complex is sustained in the biomass mash through a 2^{nd} pH adjustment, such an example reduces the duration of the 1^{st} pH level to a few hours, respectively less than 2 days, respectively less than a week, followed by a 2^{nd} pH adjustment with a base or an acid, at a duration which can range from 30 minutes through to 1 year, respectively through to 2 years, at prevailing temperatures (A2 in Fig.1).

### On separation:

In the prior art in the production of plant juice an immediate separation of the biomass mash into a plant juice is required.

In contrast hereto, embodied in the invention, the pH adjusted stored biomass mash having sustained the protein complex can be *separated daily, respectively at least* weekly, respectively at least monthly, respectively at least yearly.

### The separation leads to solids and the plant juice.

The solids of this separation process provide a feedstock for livestock respectively are stored for this purpose, respectively provide a feedstock for biogas production respectively are stored for this purpose, respectively provide a substrate for industrial production, respectively are stored for this purpose, such as the production of fibers, but not limited to that.

Further, the solids can be used immediately, respectively stored in airtight silos or containers ranging from at least 10 m³ through to at least 5,000 m³ at prevailing temperatures.

The plant juice of this separation process can be stored in airtight pallet tanks ranging from 50 liter through to 1,000 liter, respectively in air tight silos or containers ranging from at least 10 m³ through to at least 5,000 m³ at prevailing temperatures (AA1, AA2 in Fig.1).

Embodied in this present invention is that those pallet tanks, respectively containers, respectively silos of plant juice are armed with a pH sensor(s) in combination with a drum or pallet tank containing a base as well as a drum or pallet tank containing an acid (Fig.2).

Further to that, through automation of this entire process of a sensor driven pH dosage combined with a regulated mixing at programmed intervals, ranging from once every 30 minutes through to at least once every three days, isolated pockets at unwanted pH levels during anaerobic storage of the plant juice can be avoided (Fig.2).

### Corrective pH adjustments:

Upon above separation, the pH level of the 1^{st} pH adjustment of the biomass mash can be transferred to that of the plant juice derived thereof while maintained at that level thereafter (AA1 in Fig.1).

However, this automatic transfer of the pH level of the 1^{st} pH adjustment of the biomass to that of the plant juice derived thereof is not always given (AA1 in Fig.1).

In such a case, embodied in this present invention, the pH level of the plant juice derived thereof has to be corrected by an acid or base in a 1st pH adjustment while being sustained in the range of a duration from 30 minutes through to at least a year, respectively at least two years (AA1-1, in Fig. 1).

Similarly, upon above separation, the pH level of the 2^{nd} pH adjustment of the biomass mash can be transferred to that of the plant juice derived thereof while maintained at that level thereafter (AA2 in Fig.1).

However, this automatic transfer of the pH level of the 2^{nd} pH adjustment of the biomass to that of the plant juice derived thereof is not always given.

In such a case, embodied in this present invention, the pH level of the plant juice derived thereof has to be corrected by an acid or base in a 2^{nd} pH adjustment while being sustained in the range of a duration from 30 minutes through to at least a year, respectively at least two years (AA2-2 in Fig. 1).

In the examples above, the juice will be transported to a centrally located plant protein processing plant at regular intervals, from once a day through to at least once a week, respectively to at least every two weeks, respectively to at least every month, to at least every two months through to at least once a year.

**DEFINITIONS** in the context of this invention:
BIOMASS MASH or the chopped, sheared and mashed, but not limited hereto, wet biomass.
CFU, comprising a bacterial colony formation of log CFU of 0 CFUs per g/biomass mash or FM in the juice.
C6 sugars are carbohydrates whose molecule consists of 6 carbons (hexoses).
C5 sugars are carbohydrates whose molecule consists of 5 carbons (pentoses).
CP or Crude Protein levels are an expression of total N in the dry matter, as measured by the Kjeldahl method, and a commonly used measure of quality of a feedstock. On average 80% hereof are proteins.
FERTILIZERS are in this context the mineral residues encountered and captured during the successive steps in processing the present invention ranging from the mashed beets through to the production of plant proteins.
FUNCTIONALITY OF THE PROTEIN COMPLEX or a preservation of a given protein incl. the precise sequence of its amino acids that allows it to fold up into a particular three-dimensional shape while sustaining its particular function(s), respectively that of the peptides and amino acids derived thereof.
NDF or Neutral Detergent Fiber is measured according to the method of P.J.van Soest, 1963, in Use of detergents in the analysis of fibrous feeds, J. Assoc.Off.Anal. Chemistry 46: 825-829, and
PARENT BIOMASS is the crop species the stored biomass mash and plant juice were derived off.
PLANT JUICE is derived from wet biomass and comprises the protein complex, both C6 sugars and C5 sugar species as well as mineral salts.
PRESERVATION of the protein complex comprises both the physical presence of the proteins as well as their functionality,
PREVAILING TEMPERATURES, comprising the day-to-day temperatures and temperature changes the anaerobic storage of the biomass respectively the plant juice is exposed to,
PROTEIN JUICE refers specifically to the water-soluble protein complex within the plant juice.
PROTEINS RESPECTIVELY THE PROTEIN COMPLEX comprise both proteins, peptides and amino acids.
WHOLE CROP BIOMASS in this context is a harvest of the crop of a maturity at the dough stage with dry matter contents of more than 30% but 50% as the maximum, beyond access in the prior art, which amounts to significant advantages in protein yield and cost to benefit ratios of this invention.

The present invention embodies a non-enzymatic method to an aerobic stored biomass-derived juice, respectively a plant protein juice, respectively any protein juice for that matter, from a short duration through to a year or more, from small amounts through to on a large scale, through a combination of a given pH level, an automatic regulation hereof at regular mixing under the prevailing temperatures, while sustaining the physical presence of the proteins and the functionality thereof. Further, distinctly different from a biomass derived plant juice in the prior art, the embodied invention comprises a product or plant juice composition, diagnostic and common to all, of a zero pectin content at zero CFU while containing sucrose respectively sucrose spores at a given presence hereof in the sourced biomass. On account of the storage of plant derived proteins under those conditions, the invention embodies a use of highly improved logistics at significant cost-benefits to both the producer of the plant juice and the producer of the protein pellets, respectively protein meal compared to the prior art.

## Claims

1. A non-enzymatic method of preparing a plant juice from a wet biomass,
wherein the wet biomass comprises:
- wet biomass of parental biomass source, at a dry matter content of less than 300, such as of alfalfa, respectively of clovers, of grasses, of beet leaves, of rye, of triticale, of peanuts or mixtures hereof, and
- wet biomass of parental biomass source, at a dry matter content of 500 or less, more preferably of 350 or less, such as whole crop of cereals, respectively whole crop of beet, whole crop of corn, whole crop of pea, whole crop of bean, whole crop of oilseed rape, whole crop of sorghum, whole crop of sun flower, whole crop of lupins, whole crop of quinoa and mixtures thereof,
wherein said wet biomasses comprises
- A Neutral Detergent Fiber (NDF) value of less than 750 of dry matter content,
- as measured according to the method of P.J.van Soest, 1963, in Use of detergents in the analysis of fibrous feeds, J. Assoc.Off.Anal. Chemistry 46: 825-829,
- crude fiber (CF) in an amount of less than 45% of the dry matter,
- lignin in an amount of less than 200 of the dry matter content,
- crude protein (CP) in an amount of at least 10% of the dry matter content,
- C6 sugars and C5 sugars collectively in an amount of at least 10% of the dry matter content,
thereby providing a composition comprising said respective wet biomass'es,
mashing said composition through successively chopping and/or shearing to obtain a biomass mash,
separating the biomass mash into a plant juice fraction and a non-liquid or solids fraction prior to a 1^{st} pH adjustment, or after a 1^{st} pH adjustment, to a 1^{st} pH level,
whereby at a separation prior to the 1^{st} pH adjustment, the plant juice is adjusted with a base to a pH of at least 8.0 through to 10.5,
whereby at a separation after the 1^{st} pH adjustment, the biomass mash was, and the plant juice derived thereof is, adjusted with a base to a pH of at least 8.0 through to 10.5,
storing the pH adjusted biomass mash, respectively the pH adjusted plant juice, under anaerobic conditions at a duration ranging from at least 15 minutes to at least two years at a scale ranging from less than 10m³ to at least 5.000m³ in either case,
in combination with an automatic control and adjustment of the pH level and a mixing of the biomass mash, respectively the plant juice, at regular intervals, thereby obtaining a product of the biomass mash, respectively of the plant juice, of whatever parental biomass source, with in common, respectively the common, denominator of:
- a protein complex at sustained functionality hereof,
- at a zero pectin content,
- at zero CFU,
while containing at least spores of sucrose at a given presence hereof in the parental biomass source.

2. The non-enzymatic method of claim 1, wherein the plant juice is stored anaerobically from an hour to at least one year, optionally at least two years.

3. The non-enzymatic method of any of claims 1 or 2, wherein the method further comprises a 2^{nd} pH adjustment to a 2^{nd} pH level of any of
- the plant juice at the 1^{st} pH level derived from the wet biomass, and/or
- the anaerobic stored biomass mash and the plant juice derived thereof at the 1^{st} pH level, with an acid or base by a 2^{nd} pH adjustment to the 2^{nd} pH level in the range of 1 to 10.5, respectively in the range of 7 to 10.5.

4. The non-enzymatic method of claim 3, wherein the method further comprises:
a separation of the biomass mash adjusted with the 2^{nd} pH adjustment, limiting the duration of this biomass mash adjusted with the 1^{st} pH adjustment to a duration ranging from at least 30 minutes to at least a week,
at a storage of
- the plant juice, derived of fresh beets as parental biomass source and adjusted with the 2^{nd} pH adjustment,
- the biomass mash and the plant juice derived thereof as adjusted with the 2^{nd} pH adjustment,
under anaerobic conditions of a duration ranging from at least 30 minutes to at least two years at a scale of less than 10m³ to at least 5.000m³ in either case,
in combination with an automatic control and adjustment of the 2^{nd} pH level at a mixing of the biomass mash, respectively the plant juice, at regular intervals,
thereby obtaining a product of the biomass mash, respectively of the plant juice, of whatever parental biomass source, with in common, respectively as the common, denominator:
- a protein complex at sustained functionality hereof,
- at a zero pectin content,
- at zero CFU,
while containing at least spores of sucrose at a given presence hereof in the sourced parent biomass.

5. The non-enzymatic method of any of the preceding claims, wherein the method further comprises a corrective pH adjustment with a base or an acid of the plant juice, derived upon separation, to the pre-separation levels of the biomass mash,
- of 8 to 10.5 at the 1^{st} pH adjustment hereof,
- of 7 to 10.5 at the 2^{nd} pH adjustment hereof.

6. The non-enzymatic method of any of the preceding claims 1 - 5, comprising prevailing temperatures of less than 50°C throughout the method.

7. The non-enzymatic method of any of the preceding claims, wherein the base is selected from the group consisting of sodium hydroxide (NaOH), potassium hydroxide (KOH), ammonium hydroxide (NH₄OH), calcium hydroxide (Ca(OH)₂), urea (CO(NH₂)₂), and mixtures thereof.

8. The non-enzymatic method of any of the preceding claims, wherein the acid is selected from the group comprising nitric acid (HNO₃), phosphoric acid (H₃PO₄), hydrochloric acid (HCl), and mixtures thereof.

9. The non-enzymatic method according to any of the preceding claims, comprising anaerobic storage of any protein juice at a crude protein content of at least 5 gram per 100 gram juice.

10. Use of the anaerobically stored plant juice obtained by the non-enzymatic method according to any of the preceding claims, after an extended duration, ranging from an hour to at least one year, respectively at least two years, for the production of protein pellets or other industrial products.

11. Use according to claim 10 as protein meal for feeding of livestock.

12. Use of the solid fraction obtained by the non-enzymatic method according to any of the preceding claims, for feeding of livestock, the production of biogas, fiber or other industrial products.

13. Use of the mineral salts obtained by the method according to any of the preceding claims, and developed throughout the method, as a fertiliser.
